# EUROPÄISCHE PATENTSCHRIFT

(11) **EP 1 077 378 B1**
(45) Veröffentlichungstag und Bekanntmachung des Hinweises auf die Patenterteilung: **26.04.2006**
(21) Anmeldenummer: 00114876.6
(22) Anmeldetag: 12.07.2000
(51) Int. Cl.: G01P 13/00, E06B 9/56

(54) **Windmesser für Sonnenschutzanlage**
Anemometer for sun protection installation
Anémomètre pour une installation de protection du soleil

(30) Priorität: 14.07.1999 DE 19932729; 14.10.1999 DE 19949556
(43) Veröffentlichungstag der Anmeldung: 21.02.2001
(73) Patentinhaber: WAREMA Renkhoff GmbH, D-97828 Marktheidenfeld (DE)
(72) Erfinder: Kohlmann, Hans Albrecht, 97828 Marktheidenfeld (DE); Trunk, Martin, 97900 Külsheim/Tiefental (DE); Liehr, Jörg, 63741 Aschaffenburg (DE); Weingärtner, Thomas, 97508 Grettstadt (DE)
(74) Vertreter: Erb, Henning

(56) Entgegenhaltungen:
- DE-A- 2 931 956
- DE-U- 9 306 368
- DE-U- 20 000 682
- FR-A- 2 481 467
- NL-A- 9 400 103

## Beschreibung

Die Erfindung befaßt sich mit einer Sonnenschutzanlage mit einem Sonnenschutzbehang, wenigstens einem Antrieb für dessen Verstellen und einem Windmesser, der beim Überschreiten einer oberhalb eines Schwellenwertes liegenden Größe eine Steuerung veranlaßt, den Behang einzufahren und die auf die Sonnenschutzanlage einfahrende Windkraft auch im Hinblick auf aus der Horizontalen abweichende Windgeschwindigkeitskomponenten erfaßt.

Es ist bereits bekannt, Windmesser in der Form von Mehrschalen-Anemometern zur Erfassung von Windgeschwindigkeiten heranzuziehen, wobei die Anemometer meist auf dem Dach eines Gebäudes sitzen und eine zentrale Steuerung beim Überschreiten des Schwellenwertes das Einfahrsignal für alle an dem Gebäude angebrachten Sonnenschutzanlagen gibt. Eine derartige Erfassung der Windgeschwindigkeit ist jedoch mit einer Reihe von Problemen behaftet.

Zunächst besteht bei einer zentralen Erfassung der Windgeschwindigkeit grundsätzlich ein Problem darin, daß an bestimmten Stellen der Fassade erheblich höhere oder niedrigere Windgeschwindigkeiten vorliegen können. So können bei einigen Anlagen bereits zu Beschädigungen führende Windbelastungen auftreten, während am zentralen Windmesser noch kein Überschreiten des Grenzwertes vorliegt. Andererseits werden beim Überschreiten des Grenzwertes alle Sonnenschutzanlagen eingefahren, auch wenn eine unter Sonneneinstrahlung stehende Fassade windgeschützt liegt.

Ein weiteres Problem bekannter Windmesser besteht in der Verwendung der Schalenanemometer, die lediglich die Horizontalkomponente des anstehenden Windes erfassen können, so daß Auf- und Fallwinde, die an den Fassaden auftreten können, unberücksichtigt bleiben.

In der Praxis behilft man sich bei zentral gesteuerten Sonnenschutzanlagen zur Vermeidung von Beschädigungen damit, den Schwellenwert, oberhalb dessen die Behänge eingefahren werden, relativ niedrig anzusetzen. Allerdings führt dies in den meisten Fällen zu einem allzu frühen Einfahren der Sonnenschutzanlagen mit der Folge, daß die Sonne ungehindert in die nicht mehr verschatteten Räume einstrahlen kann.

Es sind bereits auch Windmesser bekannt, die eine auf die Sonnenschutzanlage einfahrende Windlast auch im Hinblick auf aus der Horizontalen abweichende Windgeschwindigkeitskomponenten erfassen können. So wird beispielsweise in dem DE 93 06 368 U eine statische Kraftmessung in Anlageteilen als korrelierende Größe für die Windbelastung erfaßt.

In der DE 29 31 956 ist die Verwendung temperaturempfindlicher Sensoren vorgeschlagen worden.

Aus dem NL 9 400 103 ist es bekannt, einen gesonderten Auslenkkörper vorzusehen, der oberhalb einer Grenzauslenkung ein Signal zum Einfahren des Behangs auslöst.

Aus der DE 30 15 989 A1 ist es schließlich bekannt, eine Pfeife vorzusehen, die in einer bestimmten Tonfrequenz vom Wind angeregt wird, wobei die Amplitude des Schalls als Maß für die Windgeschwindigkeit dient.

Die Aufgabe der vorliegenden Erfindung besteht darin, eine Sonnenschutzanlage mit einem Windmesser zu schaffen, die eine Verringerung der Sicherheiten beim Festlegen des Schwellenwertes, oberhalb dessen die Steuerung den Behang einfährt, zuläßt.

Erfindungsgemäß wird die Aufgabe dadurch gelöst, daß der Windmesser einen Sensor zur Erfassung von Vibrationen aufweist, der die winderregten Schwingungen eines Referenzkörpers erfaßt, der der Windströmung ausgesetzt ist.

Die erfindungsgemäße Lösung bietet den Vorteil, daß mit Hilfe eines Referenzkörpers die Windgeschwindigkeit unabhängig von der jeweiligen Sonnenschutzanlage ermittelt werden kann, so daß der Windmesser nicht individuell an die Sonnenschutzanlage angepaßt zu werden braucht. Die Schwingungsanregung des Referenzkörpers durch den Wind erfolgt durch die Ausbildung einer karmanschen Wirbelstraße im Strömungsnachlauf, die eine pulsierende Kraft quer zur Windrichtung auf den Referenzkörper verursacht. Da in dem für den Sonnenschutz interessanten Bereich von Windgeschwindigkeiten bis etwa 25 m/sek. die Ablösung für kleine Körper periodisch erfolgt, ist die Wirbelablösefrequenz ein von dem Sensor verwertbares Maß für die Anströmgeschwindigkeit.

Vorzugsweise ist der Referenzkörper als schwingfähig gelagerter Kreiszylinder oder schwingfähig gelagerte Kugel jeweils bestimmten Durchmessers ausgebildet, wobei der Sensor oberhalb einer bestimmten erfaßten Grenzfrequenz das Einholen des Behangs veranlaßt. Bei rotationssymmetrischen Körpern hängt die Wirbelablösefrequenz in guter Näherung vom charakteristischen Durchmesser des Körpers und von der Anströmgeschwindigkeit ab, so daß die vom Sensor erfaßte Frequenz bei gegebenem Durchmesser ein unmittelbares Maß für die anliegende Windgeschwindigkeit ist. Die durch den Wind am Referenzkörper erzeugte Wirbelfrequenz wird mit Hilfe einer geeigneten Mechanik im Zusammenspiel mit dem Sensor ausgewertet. Als geeignete Sensoren zur Auswertung der Wirbelfrequenz können Vibrationsschalter dienen. Die Auswertung der resultierenden Bewegung kann zweckmäßigerweise auch mit Hilfe eines Hall-Sensors erfolgen. Dabei können elektrische Verbindungen zu bewegten Elementen vermieden werden, so daß die Anordnung nicht verschleißbehaftet ist.

Die schwingfähige Lagerung des Referenzkörpers kann beispielsweise dadurch erreicht werden, daß dieser von einer schwingfähigen Membran gehalten ist. Eine Membran erlaubt durch Änderung ihrer Beschaffenheit eine Beeinflussung der Dämpfung des Systems und der Eigenfrequenz. Diese sollte außerhalb des Frequenzspektrums der Zuströmturbulenzen liegen, um Resonanzerscheinungen zu vermeiden. Auch sollten sich die Schwingungseigenschaften im relevanten Temperaturbereich nur unwesentlich ändern. Die Membran kann gleichzeitig die Öffnung eines Gehäuses verschließen, in welchem der Sensor angeordnet ist.

Da bei realem Wind oftmals bereits Turbulenzen in der Zuströmung vorliegen, sind vorzugsweise in Windanströmrichtung vor dem Referenzkörper Windleitelemente vorgesehen, welche die Zuströmturbulenzen positiv modulieren. Zweckmäßigerweise sind die Windleitelemente als Schutzgitter des Referenzkörpers ausgebildet und umgeben den Referenzkörper wenigstens teilweise, so daß dieser vor Beschädigungen durch äußere Einflüsse geschützt ist.

Es versteht sich, daß eine Sonnenschutzanlage auch mit mehreren Windmessern ausgestattet sein kann, um die Präzision bei der Erfassung der Windlast weiter zu erhöhen, wobei auch eine Kombination unterschiedlicher Windmesser, Sensoren oder Sensorköpfe denkbar ist.

In einer besonders bevorzugten Ausführungsform der Erfindung ist neben dem Windmesser mit einem Sensor ein Sensor zur Erfassung der Ist-Stellung des Behangs vorgesehen, und die Steuerung ermittelt aus der erfaßten Ist-Stellung des Behangs und der gemessenen Windlast die tatsächliche mechanische Belastung der Sonnenschutzanlage. Durch den zusätzlichen Sensor ist es möglich, die durch die Ausfahrlänge des Sonnenschutzbehangs maßgeblich bestimmte Angriffsfläche der Anlage für den Wind mit in die Sicherung einzubeziehen, so daß die Steuerung mit zunehmender Windlast zwar nur noch geringere Ausfahrlängen zuläßt, die aber zumindest eine begrenzte Verschattung auch bei einem für die maximale Ausfahrlänge bereits überschrittenen Schwellenwert zulassen.

Besonders zweckmäßig ist eine Sonnenschutzanlage, bei welcher ein zuvor beschriebener Windmesser unmittelbarer Bestandteil der betriebsfertig vormontierten Sonnenschutzanlage ist, die an ein herkömmliches Haushaltsstromentz anschließbar ist. Eine derartige Anlage ist nicht auf zusätzliche Steuerleitungen angewiesen und kann nach dem Anschluß an das Stromnetz unabhängig von anderen Sonnenschutzanlagen in Betrieb genommen werden.

Nachfolgend wird anhand der beigefügten Zeichnungen näher auf eine Sonnenschutzanlage mit einem erfindungsgemäßen Windmesser eingegangen. Es zeigen:
- Fig. 1: ein schematisches Schaubild einer Sensorik zur Ermittlung relevanter Eingangsgrößen für die Steuerung von Sonnenschutzanlagen;
- Fig. 2: einen Schnitt einer Sonnenschutzanlage mit integrierter Sensorik;
- Fig. 3: ein Funktionsschaubild einer mit der Sensorik gemäß Fig. 1 oder 2 verknüpften Steuerung;
- Fig. 4: einen Schnitt eines Windmessers;
- Fig. 5: einen Schnitt eines weiteren Wind messers;
- Fig. 6: eine schematische Schnittzeichnung eines Gehäuses für einen Windmesser gemäß Fig. 4 oder 5.

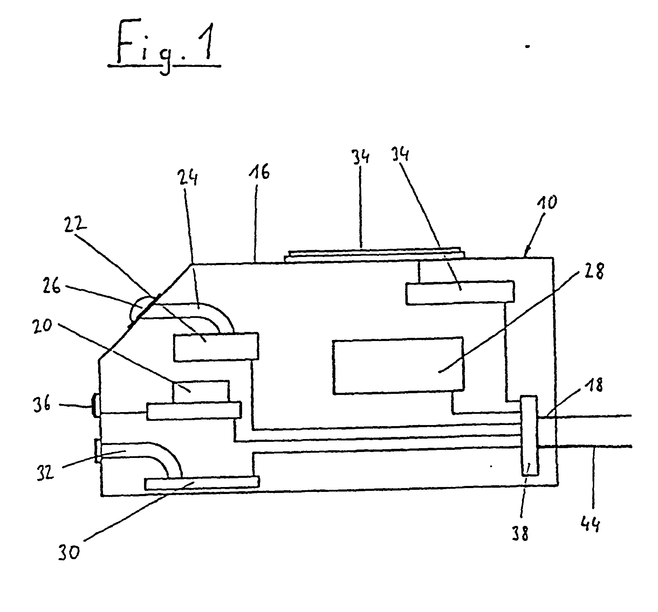

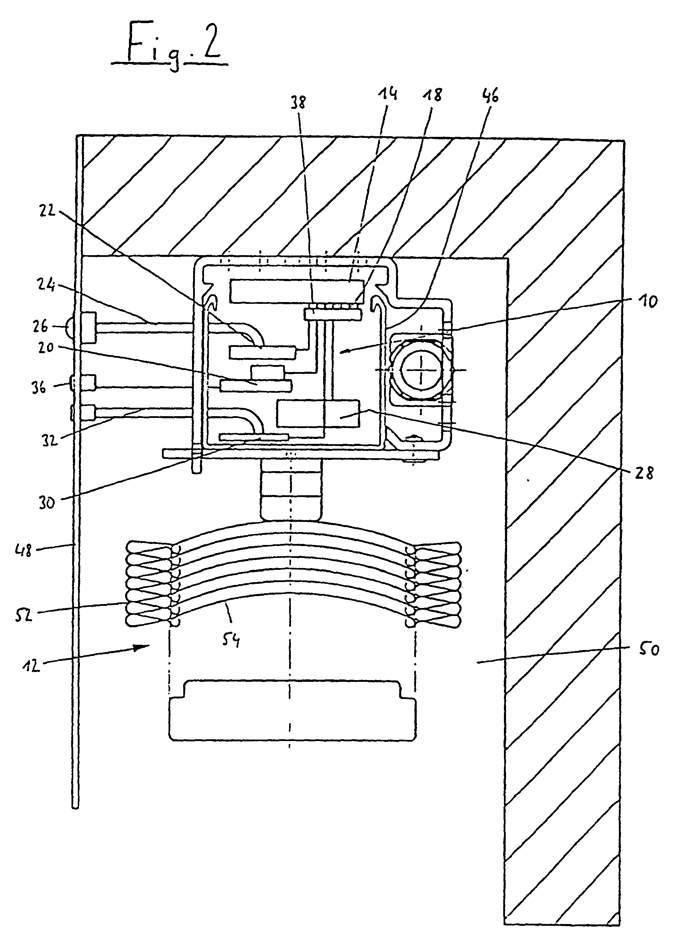

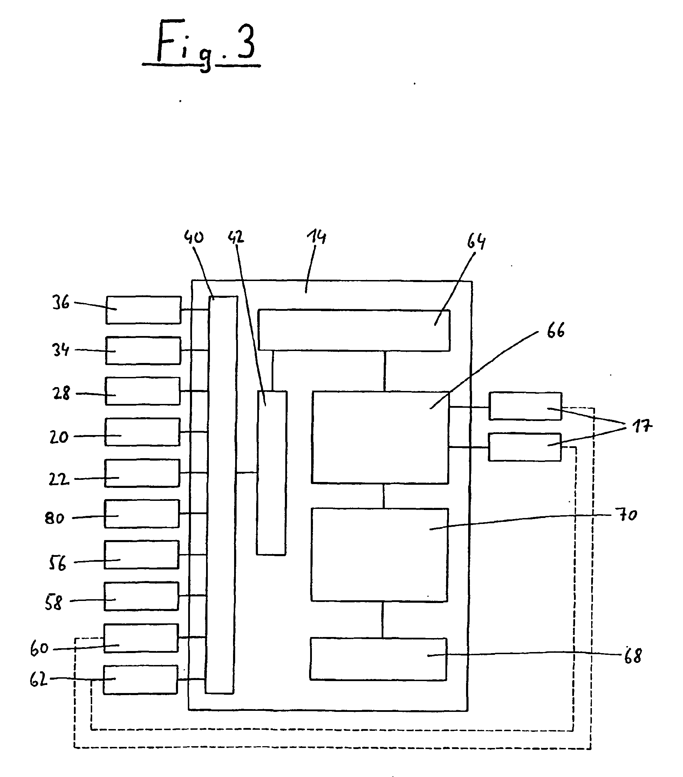

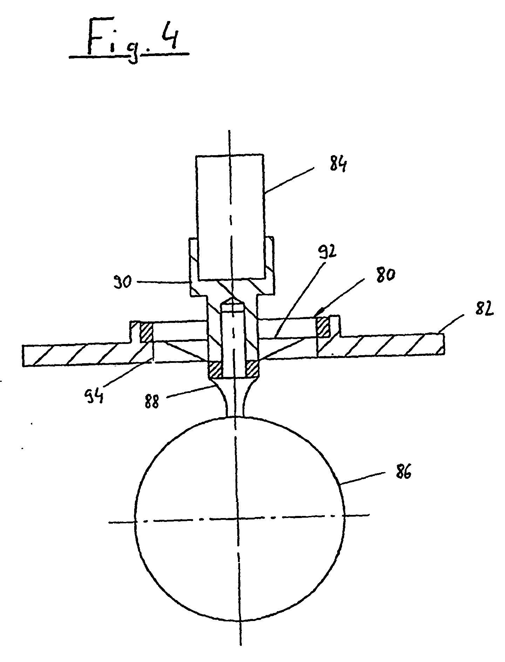

In Fig. 1 ist eine Sensorik 10 zur Ermittlung aktiver Eingangsgrößen zur Regelung einer Sonnenschutzanlage 12 (siehe Fig. 2) dargestellt, die an eine Steuerung 14 (siehe Fig. 2 und 3) übermittelt werden, die bei Erreichen definierter Schaltwerte Fahrbefehle an die Antriebe 17 (siehe Fig. 3) der Sonnenschutzanlage 12 übermittelt und so eine automatische Einstellung der Sonnenschutzanlage 12 ermöglicht.

Die in Fig. 1 dargestellte Sensorik 10 ist in einem separaten Gehäuse 16 untergebracht, das mit Hilfe von Anschlußleitungen 18 mit der Steuerung 14 gekoppelt ist. Die Sensorik 10 muß wenigstens die Eingangsgrößen Uhrzeit/Datum, Sonnenintensität und Himmelsrichtung der Sonnenschutzanlage ermitteln, um eine automatische Steuerung der Sonnenschutzanlage 12 in Abhängigkeit vom Sonnenstand ermöglichen zu können. Insbesondere bei außen liegenden Sonnenschutzanlagen sind die Erfassung der zusätzlichen Eingangsgrößen Windgeschwindigkeit und Außentemperatur durch die Sensorik 10 sowie ein Regendetektor sinnvoll.
Zur Ermittlung der Eingangsgröße Uhrzeit/Datum verfügt die Sensorik 10 über einen Funkempfänger 20, der elektromagnetische Funkuhrsignale empfängt und zur Berechnung des aktuellen Sonnenstandes an die Steuerung 14 weitergibt. Der Funkempfänger 20 ist selbstverständlich mit einer geeigneten Antenne (nicht dargestellt) ausgebildet, die einen sicheren Datenempfang standortunabhängig innerhalb des Sendebereichs sicherstellt. Die Ermittlung des Wochentages und die Sommerzeitkorrektur können programmtechnisch in der Steuerung 14 realisiert werden.

Statt eines Funkempfängers 20 kann die Sensorik 10 auch über eine Uhr verfügen, die die benötigten Eingangsgrößen bereitstellt. Allerdings besteht bei unabhängigen Uhren der Nachteil, daß sich im Laufe der Jahre Gangabweichungen einstellen oder es infolge von Stromausfällen gar zu einer völligen Verstellung kommt, die einen erneuten manuellen Eingriff mit Stellen der Uhrzeit erforderlich macht. Demgegenüber bietet die Ermittlung der Eingangsgröße Uhrzeit/Datum auf der Basis des Funkuhrprinzips eine nahezu perfekte Ganggenauigkeit und die Möglichkeit des automatischen Erst- und Nacheinstellens.

Die Ermittlung der Eingangsgröße Sonnenintensität erfolgt mit Hilfe eines Sonnensensors 22, der als Fotowiderstand, Fotodiode oder Solarzelle ausgebildet ist. Es ist auch denkbar, mehrere derartige Sensoren - auch unterschiedlicher Art - zur Ermittlung der Sonnenintensität vorzusehen. Der Sonnensensor 22 ist bei dem dargestellten Ausführungsbeispiel unmittelbar auf der Platine des Auswertesystems innerhalb des Sensorgehäuses 16 angeordnet und über einen Lichtleiter 24 mit einer auf der Gehäuseaußenwand sitzenden Linse 26 verbunden. Es ist jedoch auch denkbar, das lichtempfindliche Element selbst auf der Gehäuseaußenseite zu montieren und die Verbindung zu der Platine mit Hilfe elektrischer Leitungen herzustellen. Der Sonnensensor liefert der Steuerung 14 eine Information darüber, ob die Sonnenschutzanlage 14 bzw. die von ihr zu verschattende Fensterfläche überhaupt einer Sonneneinstrahlung ausgesetzt ist oder ob beispielsweise infolge von Bewölkung ein Ausfahren der Sonnenschutzanlage überhaupt notwendig ist. Umgekehrt kann der Sonnensensor 22 auch beispielsweise von einer gegenüber liegenden Fassade reflektiertes Sonnenlicht erfassen und ein Ausfahren der Sonnenschutzanlage zur einer Tageszeit bewirken, zu welcher die Steuerung eigentlich davon ausgeht, daß die betroffene Fassade im Schatten liegt.

Zur Erfassung der Eingangsgröße Himmelrichtung, d.h. der geographischen Ausrichtung der Sonnenschutzanlage 12, ist ein Richtungssensor 28 vorgesehen, der nach der Montage automatisch die Ausrichtung der Sonnenschutzanlage 12 erkennt, was bei dem in Fig. 1 separat ausgeführten Gehäuse 16 der Sensorik 10 natürlich voraussetzt, daß dieses sich in einer genau definierten Lage zur Sonnenschutzanlage befindet. Der Richtungssensor 28 kann in seiner Ausführung als elektronischer Kompaß zwei oder drei Achsen des Endmagnetfeldes messen und aus den einzelnen Komponenten des Magnetfeldes die Absolutrichtung berechnen. Für die meisten Anwendungsfälle reicht die Messung der beiden Horizontalkomponenten aus, da die Sonnenschutzanlage und damit der Richtungssensor 28 bei der Montage mit Hilfe einer Wasserwaage exakt ausgerichtet werden. Es ist darauf zu achten, daß ferromagnetische Bauteile der Sonnenschutzanlage, wie z. B. die Antriebsmotoren 17 das zu messende Erdmagnetfeld nicht stören. Während Störungen innerhalb der Sensorik 10 rechnerisch kompensiert werden können, sollten die Antriebsmotore 17 während der Messungen ausgeschaltet bleiben, um das Meßergebnis nicht zu verfälschen. Der elektronische Kompaß 28 kann beispielsweise als Fluxgatesensor oder als magnetoresesiver Sensor ausgeführt sein.

Weiterhin bietet die Sensorik 10 die Möglichkeit mit Hilfe eines Windsensors 80 die Eingangsgröße Windgeschwindigkeit zu erfassen und damit bei starkem Wind eine Gefährdung der Anlage durch mechanische Überbelastung durch Veranlassen des Einfahrens der Anlage zu vermeiden.

Bei der in Fig. 1 dargestellten Sensorik 10 wird als herkömmlicher Windsensor 30 ein Drucksensor eingesetzt, der im Inneren des Gehäuses 16 angeordnet ist und über eine Schlauchverbindung 32 mit der Umgebung in Verbindung steht. Weitere herkömmliche Sensoren, mit Hilfe derer ein Luftstrom erfaßbar ist, der als Maß für die Windgeschwindigkeit gelten kann, sind Thermosonden, bei welchen der Luftstrom einen elektrisch beheizten Meßfühler abkühlt, so daß bei konstanter Heizleistung die Temperatur oder bei konstanter Temperatur die Heizleistung ein Maß für die Strömungsgeschwindigkeit ist, oder eine DMS-Schaltung, die die Biegung eines dem Luftstrom ausgesetzten bestimmten Körpers als Maß für die Strömungsgeschwindigkeit mit Hilfe zweier DMS-Elemente erfaßt und mit einer Brückenschaltung auswertet. Selbstverständlich kann statt der Schlauchverbindung 32 der Windsensor 30 wiederum an der Oberfläche des Gehäuses 16 montiert sein.

Bei der Sensorik 10 der vorliegenden Erfindung wird als Windsensor 80 ein Sensor eingesetzt, der zur Erfassung der Windgeschwindigkeit die Vibrationen eines Referenzkörpers erfaßt, der schwingfähig gelagert und dem vorbeiströmenden Wind ausgesetzt ist.

Dabei erfolgt in dem für den Sonnenschutz interessanten Bereich von Windgeschwindigkeiten bis etwa 25 m/s für kleine Körper eine periodische Wirbelablösung, so daß sich im Strömungsnachlauf eine Karmansche Wirbelstraße ausbildet. Die Ablösefrequenz der Wirbel hängt dabei in guter Nährung nur vom charakteristischen Durchmesser des Körpers und von der Windanströmgeschwindigkeit ab, so daß die Frequenz bei bestimmtem Körperdurchmesser als Maß für die Windgeschwindigkeit herangezogen werden kann.

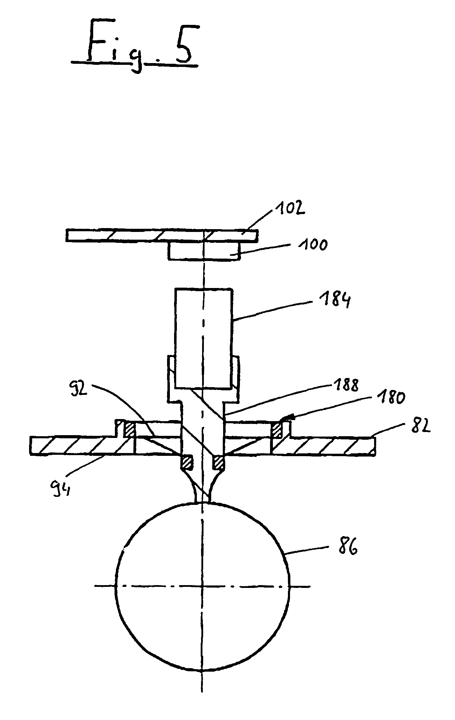

Fig. 4 zeigt im Detail den Windmesser 80 mit einem Gehäuse 82, in welchen ein Vibrationsschalter 84, beispielsweise ein Quecksilber- oder Kugelschalter, angeordnet ist. Der dem Wind ausgesetzte Referenzkörper 86, der beispielsweise als Kugel oder auch Zylinder ausgebildet sein kann, ist über eine zweiteilige mechanische Verbindung 88, 90 mit dem Vibrationsschalter 84 verbunden. Dabei ist ein erster Teil 86, der an dem Referenzkörper 86 angeformt ist, in einen zweiten Teil 90 eingerastet, der mit einer Membran 92 verbunden ist, die in eine Gehäuseöffnung 94 eingepaßt ist. Die Membran 94 dichtet das Gehäuse 82 ab und übt eine Rückstellkraft auf den Referenzkörper 86 aus, wenn dieser von dem anliegenden Wind ausgelenkt wird. Die Eigenfrequenz des entstehenden Systems ist so gewählt, daß sie deutlich außerhalb des Frequenzspektrums des angreifenden Windes liegt, um eine Beeinflussung der Kennlinie zu vermeiden. Die Beschaffenheit der Membrane 92 beeinflußt je nach Härte, Größe, Material und Form die Dämpfung und die Eigenfrequenz des Systems. Als Material findet beispielsweise ein Kunststoff Verwendung, dessen Elastizitätseigenschaften über das bei Außenanlagen auftretende Temperaturspektrum nur geringfügig variieren. Selbstverständlich wird die Eigenfrequenz auch durch die bewegten Massen und Trägheitsmomente sowie die vorliegenden Hebelverhältnisse beeinflußt.

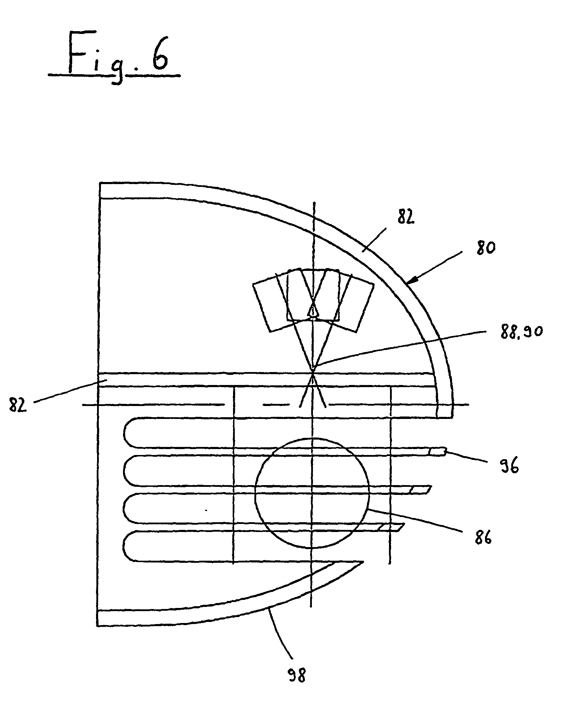

Während bei idealisierter turbulenzfreier, stationärer Anströmung ein nahezu linearer Zusammenhang zwischen der Anströmgeschwindigkeit und der Schaltfrequenz des Vibrationsschalters 84 besteht, treten bei realem Wind, beispielsweise durch geografische Hindernisse und in der Windrichtung befindliche Bebauung, Zuströmturbulenzen auf, die zu einem sich zu hohen Windgeschwindigkeiten erweiternden Schaltbereich führen. Dieser Schaltbereich läßt sich durch eine geeignete Kombination von Geometrie, Material und Masse des Windangriffskörpers, mechanische Eigenschaften der Membrane 92 und Auslöseempfindlichkeit des Vibrationsschalters 84 schmal halten. Gleiches gilt, wenn der Vibrationsschalter 84 bei einem Windmesser 180 (siehe Fig. 5) durch einen Magneten 184 ersetzt wird, dessen Bewegung mit Hilfe eines Hall-Sensors 100 erfaßbar ist, der mittels einer Halterung 102 in einem definierten Abstand zu dem Magneten 184 angeordnet ist. Der Abstand zwischen Magnet 184 und Hall-Sensor 100 beeinflußt je nach Magnetfeld des Magneten 184 und Art des Hallsensors die Empfindlichkeit (Schaltschwelle) des Systems. Im übrigen entspricht der Aufbau des Windmessers 180 demjenigen des Windmessers 80 in Fig. 4, wobei vergleichbare Teile mit gleichen Bezugszeichen versehen worden sind. Lediglich die beiden Halteteile sind einstückig als ein Halteteil 188 ausgebildet. Eine positive Beeinflussung der Zuströmturbulenz läßt sich auch durch Windleitelemente 96 erreichen (siehe Fig. 6), die den Referenzkörper 86 wenigstens teilweise umgeben und bei dem in Fig. 6 dargestellten Windmesser 80 als Schutzgitter 98 ausgebildet sind und gleichzeitig für einen Schutz des Referenzkörpers und auch der empfindlichen Membran 92 vor äußeren Einflüssen dienen.

Um eine unterschiedliche Empfindlichkeit des Windmessers 80 bei unterschiedlichen Angriffswinkeln des Windes zu erreichen, wie dies beispielsweise bei Sonnenschutzanlagen gefordert sein kann, die auf unterschiedliche Windrichtungen unterschiedlich empfindlich reagieren, kann der Referenzkörper 86 auch eine elipsoide Form aufweisen, wodurch sich abhängig von der Anströmrichtung der charakteristische Durchmesser und somit die Schaltimpulse ändern.

Das Ansprechverhalten des Windmessers 80 kann bei unveränderter Membran 92, unverändertem Vibrationsschalter 84 bzw. Magneten 184 und gleicher Auswertelektronik allein durch den Austausch des Referenzkörpers 86 verändert werden, da unterschiedliche Referenzkörper 86 zu einer veränderten Wirbelablösung führen, so daß die Grenzfrequenz des Windmessers 80 erst bei einer höheren oder bereits bei einer kleineren Windgeschwindigkeit erreicht wird. Je nach Empfindlichkeit des gewählten Vibrationsschalters 84 liegt der Druchmesser des Referenzkörpers im ein- bis zweistelligen Millimeterbereich. Gute Ergebnisse sind bei einem Kugelschalter mit einem Körperdurchmesser von 8 mm und bei einem Quecksilberschalter bzw. einer Magnet-Hallsensor-Anordnung im Abstand von 1 mm mit einem Körperdurchmesser von 25 mm erzielt worden.

Die in Fig. 1 dargestellte Sensorik 10 verfügt weiterhin über einen Regensensor 34, der Niederschlag bzw. Feuchtigkeit erfassen kann und insbesondere bei nässeempfindlichen Sonnenschutzanlagen, wie z. B. Markisen, das Einfahren der Anlage veranlassen kann.

Die Sensorik 10 verfügt auch über einen Temperatursensor 36, dessen Signal als weitere Eingangsgröße für die Steuerung 14 herangezogen werden kann.

Die in Fig. 1 dargestellte Sensorik 10, die in einem separaten Gehäuse 16 untergebracht ist, verfügt ferner über einen integrierten Mikrocontroller 38, der einen Multiplexer 40 und einen Analog/Digital-Wandler 42 (siehe Fig. 3) aufweist, wobei der Multiplexer 40 und der A/D-Wandler 42 in Fig. 3 als Teil der Steuerung 14 dargestellt sind. Der Mikrocontroller 38 ist über eine Zweidraht- oder Dreidraht-Busleitung 44 mit der Steuerung 14 verbunden.

Fig. 2 zeigt einen schematischen Querschnitt eines Lamellenraffstores 12, in dessen Oberschiene 46 eine Sensorik 10 entsprechend der in Fig. 1 dargestellten Sensorik ohne Gehäuse und eine Steuerung 14 integriert sind. Die Linse 26, der Temperatursensor 36 und der Windsensor 30 sind an der Außenseite einer Blende 48 vorgesehen, die den oberen Teil eines Schachtes 50 abdeckt, in welchem der Raffstore 12 montiert ist. Der Raffstore 12 verfügt über einen Lamellenbehang 52, dessen Einzellamellen 54 in Fig. 2 in der eingefahrenen Stellung als Paket gerafft dargestellt sind. Der Raffstore 12 verfügt über zwei Motoren 17 (siehe Fig. 3), mit Hilfe derer der Lamellenbehang 52 ausfahrbar und die Neigung der Lamellen 54 einstellbar ist. Die Ansteuerung der Motoren wird von der Steuerung 14 übernommen, wobei neben einer rein automatischen Ansteuerung auch ein manueller Eingriff für die Ausfahrlänge und die Winkeleinstellung des Behangs 52 vorgesehen ist.

Das in Fig. 3 dargestellte Funktionsschaubild zeigt die Steuerung 14 für die Motoren 17 des Raffstores 12 in Fig. 2 mit den zur Ermittlung relevanter Eingangsgrößen vorgesehenen Sensoren. Neben dem bereits beschriebenen Temperatursensor 36, Regensensor 34, Richtungssensor 28, Funkempfänger 20, Sonnensensor 22 und Windsensor 80 sind zur Ermittlung weiterer Eingangsgrößen die bereits angesprochenen manuellen Handschalter 56, 58 für die Ausfahrlänge bzw. die Winkeleinstellung des Behangs 52 dargestellt. Die Handschalter können auch in Form einer Fernbedienung ausgeführt sein. Weitere Eingangsgrößen stellen die mit Hilfe eines Gebers 60 erfaßte Ist-Ausfahrlänge sowie die mit Hilfe eines weiteren Gebers 62 erfaßte Ist-Winkelstellung des Behangs 52 dar. Die beiden Geber 60, 62 können beispielsweise in Form von Drehwinkelgebern an den Motoren 17 vorgesehen sein.

Die erwähnten gemessenen oder eingestellten Eingangsgrößen werden an den Multiplexer 40 und einen diesem nachgeschalteten Analog/Digital-Wandler 42 weitergegeben, der die eingehenden Sensorsignale seriell wandelt. An den Wandler 42 schließt sich eine Sensorsignalanpassung 64 an, die beispielsweise Kennlinien linearisiert oder Signalimpulse in eine kontinuierliche Größe umwandelt. Auf einem EPROM-Speichermodul 66 sind Ablaufprogramme gespeichert, die in Abhängigkeit vom Ausgangssignal der Sensorsignalanpassung 64 die Ausgangsgrößen zur Ansteuerung der Motoren 17 erzeugen. Die Steuerprogramme werden weiterhin vom Inhalt eines Speichers 68 beeinflußt, in welchem Informationen über die geographische Länge und Breite des Ausstellungsortes der Sonnenschutzanlage 12 hinterlegt sind, da nur über die exakte geographische Angabe eine exakte Ermittlung des Sonnenstandes relativ zur Sonnenschutzanlage 12 möglich ist. Allerdings ist auch ohne diese Information mit Hilfe einer Voreinstellung eine gute Näherung für viele Einsatzorte möglich.

Die Steuerung 14 ist so aufgebaut, daß die mit den Handschaltern 56, 58 manuell eingegebenen Werte für die Ausfahrlänge oder die Winkeleinstellung mit Vorrang vor der entsprechend der gemessenen Eingangsgrößen anhand der Grundprogrammierung ermittelten Einstellung behandelt werden. Wird eine manuelle Einstellung für eine bestimmte Zeit nicht korrigiert, gleicht die Steuerung 14 in einem vordefinierten Zeitraum von mehreren Stunden die Einstellung selbständig wieder an den theoretischen Idealverlauf an. Die Übergänge erfolgen sigmoidförmig, um ein möglichst unauffälliges Rückstellen zu ermöglichen. Die sigmoidförmigen Übergänge werden über Bezier-Kurven realisiert, die garantieren, daß die Rückführ-Kurve immer nur einen Wendepunkt besitzt.

Die von der Funkuhr 20 ermittelten Eingangsgrößen Tageszeit und Datum dienen zur Nachführung des Einstellungswinkels der Lamellen 54 zur Sonnenhöhe, wobei die Datumsinformation jahreszeitabhängige Änderungen der Sonnenbahn ausgleichen kann. Für die Nachführung werden spezielle Berechnungsformeln in der Steuerung 14 hinterlegt, die Azimut- und Elevationswinkel der Sonneneinstrahlung berechnen. In Verbindung mit der durch den Kompaß 28 ermittelten Eingangsgröße Himmelsrichtung läßt sich dabei berechnen, ob die Sonne überhaupt direkt auf die Anlage scheinen kann und welche Relativposition sie zur Anlage einnimmt. Diese Berechnungen lassen sich durch die in dem Speicher 68 hinterlegten Informationen über den geographischen Standort der Anlage 12 weiter präzisieren, wobei die Daten auch von einem in die Anlage integrierten GPS-Empfänger bereitgestellt werden können. Im übrigen werden die geographischen Daten bei der Montage der Anlage in dem Speicher 68 abgelegt, beispielsweise durch Übertragung aus einem mobilen GPS-Empfänger, unmittelbare Eingabe der geographischen Daten oder die hilfsweise Eingabe von den geographischen Standort näherungsweise kennzeichnenden Informationen, wie z. B. Postleitzahlen oder Kfz-Kennzeichen.

Zur Vereinfachung der Sensorik ist es auch denkbar, den Richtungssensor 28 wegzulassen und auch die Ausrichtung der Sonnenschutzanlage in dem Speicher 68 bei der Montage als Voreinstellung zu hinterlegen.

Die weiteren Eingangsgrößen Sonnenintensität, Windgeschwindigkeit, Regen und Temperatur werden so behandelt, daß bei Über- oder Unterschreiten bestimmter Schwellenwerte ein Einfahren der Anlage von der Steuerung 14 veranlaßt wird. Ggf. können diese Schwellenwerte in Abhängigkeit von dem durch die Geber 60, 62 ermittelten Ist- Ausfahrzustand der Anlage 12 variiert werden.

Zusätzlich zu dem als EPROM ausgebildeten Speicher 68 ist ein weiteres, als EEPROM ausgebildetes Speichermodul 70 vorgesehen, das eine adaptive Lernfähigkeit der Steuerung 14 ermöglicht. Mit Hilfe des Speichermoduls 70 ist es möglich, bei einem manuellen Eingriff den Systemzustand, d. h. alle für die adaptive Lernfähigkeit herangezogenen Eingangsgrößen und Ausgangsgrößen, nämlich die Einstellungsparameter des Behangs, in Form eines Zustandsvektors abzuspeichern. Als für den Lernvorgang herangezogene Eingangsgrößen kommen u. a. die Tageszeit, Monat und Wochentag, die Windgeschwindigkeit, die Temperatur und die Sonnenintensität, aber auch das Signal des Feuchtigkeitssensors 34 in Frage.

Während des Automatikbetriebes vergleicht die Steuerung 14 nunmehr permanent die Eingangsgrößen aller gespeicherter Vektoren mit den Ist-Größen des Systems. Befindet sich das System wieder in einem ähnlichen oder gar identischen Zustand, bei welchem zuvor manuell bestimmte Ausgangsgrößen in Abweichung von der Grundprogrammierung gewählt worden sind, so wird dieser Vektor erneut aufgerufen (Recall). Dies hat zur Folge, daß die gespeicherten Ausgangswerte, die einer zuvor vorgenommenen Handeinstellung entsprechen, automatisch eingestellt werden. Über die Eingangsgrößen versucht das System dabei, den Grund zu ermitteln, der zu einer Handbetätigung geführt hat. Zwar ist ein absolut sicheres Erkennen eines Grundes kaum zu erreichen, jedoch steigt mit jeder zusätzlichen bei der adaptiven Lernfähigkeit herangezogenen Eingangsgröße die Sicherheit zum Erkennen des Benutzerwillens.

Für eine sinnvolle Bestimmung des Ähnlichkeitsmaßes der Eingangsgrößen des gespeicherten Vektors zum kontinuierlich erfaßten Ist-Zustand ist es notwendig, daß die Steueralgorithmen die Eingangsgrößen des Vektors einzeln betrachten und Adaptionsregeln und Parameter speziell angepaßt werden. Es ist allerdings zu beachten, daß die Eingangsgrößen zum Teil nicht unabhängig voneinander sind, sondern sich in den Adaptionsparametern gegenseitig beeinflussen. Bei der in Fig. 3 dargestellten Steuerung ist vorgesehen, daß für jede Eingangsgröße des Vektors eine absolute Differenz zwischen dem gespeicherten Zustand und dem erfaßten Ist-Zustand ermittelt wird. Für jede Eingangsgröße ist ein Schwellenwert definiert, der erreicht werden muß, um einen Recall zu bewirken. Die Ergebnisse der einzelnen Eingangsgrößen werden logisch und-verknüpft. Daraus folgt, daß ein Recall eines gespeicherten Vektors nur dann erfolgt, wenn sich alle Eingangsgrößen im vorgegebenen Variationsbereich zum Ist-Zustand befinden.

Die Schwellenwerte sind nicht als starre Größen festgelegt, sondern für jede Eingangsgröße als sog. Recall-Bereich definiert. Diese Recall-Bereiche sollen erst bei wiederholter Betätigung adaptiert werden, um für eine größere Sicherheit und Unempfindlichkeit gegenüber zufälligen manuellen Eingriffen zu sorgen. Daher ist vorgesehen, die Recall-Bereiche bei nur einmaliger Eingabe sehr klein zu wählen, so daß ein Recall nur bei identisch mit den gespeicherten Eingangsgrößen eines Vektors übereinstimmenden Ist-Zustandswerten erfolgt.

Die Adaption der Recall-Bereiche erfolgt nach bestimmten, festgelegten Regeln, die Bestandteile der Lern- und Steueralgorithmen der Steuerung 14 sind. Erfolgt eine Handeinstellung z. B. zu einer bestimmten Tageszeit immer an einem gleichen Wochentag, geht die Steuerung davon aus, daß diese Einstellung nur an diesem Wochentag erfolgen soll. Der erzeugte Recall-Bereich wird also auf einen Wochentag beschränkt, jedoch auf alle Kalenderwochen ausgedehnt. Erfolgen die Eingaben an verschiedenen Wochentagen, erfolgt auch mit Bezug auf diese Eingangsgröße eine relativ starke Ausdehnung des Recall-Bereichs. Diese Adaption erfolgt fortlaufend, wodurch eine optimale Anpassung des Adaptionsverhaltens an das gewünschte Lernverhalten möglich ist. Der Lernalgorithmus ist ferner in der Lage, Eingabepunkte des Benutzers abhängig von ihren zeitlichen Entfernungen zueinander und ihrem Alter zu gewichten. Ältere Eingaben werden zur Definition der Recall-Bereiche nur noch begrenzt herangezogen, wobei sehr alte Vektoren von Eingangsgrößen auch gelöscht werden können.

Die Steuerung 14 bietet weiterhin die Möglichkeit eines Resets, der alle Vektoren löscht und den Algorithmus in seinen Startzustand zurückversetzt, in welchem die Ausgangsgrößen anhand der erfaßten Eingangsgrößen lediglich über die Grundprogrammierung ermittelt werden. Die automatische Steuerung ist durch die Handschalter 56, 58 auch abschaltbar.

Die Sensorik 10, Steuerung 14 und Motoren 17 der Sonnenschutzanlage 12 benötigen zur Versorgung lediglich ein herkömmliches Haushalts-Stromnetz ohne zusätzliche Bauteile oder gar Steuerleitungen, wie sie bei bisher realisierten Systemen anzutreffen sind. Mit dem Anschluß an das Stromnetz ist die Anlage betriebsbereit, wobei gegebenenfalls lediglich noch die Daten für die geographische Lage und/oder die Ausrichtung der Anlage abgespeichert werden müssen.

Statt zur Ansteuerung des beschriebenen Raffstores 12 eignet sich die beschriebene Kombination einer Sensorik 10 mit einer Steuerung 14 auch zur automatischen Ansteuerung sonstiger Sonnenschutzanlagen, wie z. B. vom Markisen. Je nach Art der anzusteuernden Sonnenschutzanlage kann die Steuerung 14 Ausgangssignale für nur einen Motor, für zwei Motoren (siehe Ausführungsbeispiel) oder auch mehr Motoren erzeugen. Zur Anpassung der Steuerung an den jeweiligen Typ von Sonnenschutzanlage muß lediglich die Grundprogrammierung angepaßt werden, wobei bei angepaßter Programmierung der Einsatz ein und derselben Einheit aus Sensorik 10 und Steuerung 14 für unterschiedlichste Arten von Sonnenschutzanlagen verwendet werden kann.
Je nach Beschaffenheit der Sonnenschutzanlage kann auf einzelne Sensoren verzichtet werden, um die Kosten für die Sensorik 10 zu senken.

## Patentansprüche

1. Sonnenschutzanlage mit einem Sonnenschutzbehang (52), wenigstens einem Antrieb zu dessen Verstellen und einem Windmesser, der beim Überschreiten einer oberhalb eines Schwellenwertes liegenden Größe eine Steuerung (14) veranlaßt, den Behang (52) einzufahren und die auf die Sonnenschutzanlage (12) einwirkende Windlast auch im Hinblick auf aus der Horizontalen abweichende Windgeschwindigkeitskomponenten erfaßt, **dadurch gekennzeichnet, daß** der Windmesser einen Sensor (84; 100; 184) zur Erfassung von Vibrationen aufweist, der die winderregten Schwingungen eines Referenzkörpers (86) erfaßt, der der Windströmung ausgesetzt ist.

2. Sonnenschutzanlage nach Anspruch 1, **dadurch gekennzeichnet, daß** der Sensor zur Erfassung von Vibrationen als Kugel- oder Quecksilberschalter, als Mikrophon oder als mit einem Magneten (184) zusammenwirkender Hallsensor (100) ausgebildet ist.

3. Sonnenschutzanlage nach Anspruch 1 oder 2, **dadurch gekennzeichnet, daß** der Referenzkörper (86) als schwingfähig gelagerter Kreiszylinder oder schwingfähig gelagerte Kugel jeweils bestimmten Durchmessers ausgebildet ist und der Sensor (84) oberhalb einer bestimmten Grenzfrequenz das Einholen des Behangs (52) veranlaßt.

4. Sonnenschutzanlage nach einem der Ansprüche 1 bis 3, **dadurch gekennzeichnet, daß** der Referenzkörper (86) von einer schwingfähigen Membran (92) gehalten ist.

5. Sonnenschutzanlage nach einem der vorhergehenden Ansprüche, **dadurch gekennzeichnet, daß** die Eigenfrequenz des schwingfähigen Systems aus Referenzkörper (86) und Membran (92) außerhalb des Frequenzbereichs liegt, in welchem das Turbulenzspektrum des Windes liegt.

6. Sonnenschutzanlage nach einem der vorhergehenden Ansprüche, **dadurch gekennzeichnet, daß** in der Windanströmrichtung vor dem Referenzkörper (86) Windleitelemente (96) vorgesehen sind, die vorzugsweise als Schutzgitter (98) den Referenzkörper (86) wenigstens teilweise umgeben.

7. Sonnenschutzanlage nach einem der vorhergehenden Ansprüche, **dadurch gekennzeichnet, daß** ein Sensor (60, 62) zur Erfassung der Ist-Stellung des Behangs (52) vorgesehen ist und die Steuerung (14) aus der erfaßten Ist-Stellung des Behangs (52) und der gemessenen Windlast die tatsächliche mechanische Belastung der Sonnenschutzanlage (12) ermittelt.

8. Sonnenschutzanlage nach einem der vorhergehenden Ansprüche, **dadurch gekennzeichnet, daß** der Windmesser mit dem Sensor (84; 100; 184) in unmittelbarer Nähe der Sonnenschutzanlage (12) angeordnet und mit einer diese individuell ansteuernden Steuerung (14) verbunden ist.

9. Sonnenschutzanlage nach einem der vorhergehenden Ansprüche, **dadurch gekennzeichnet, daß** der Windmesser unmittelbarer Bestandteil der betriebsfertig vormontierten Sonnenschutzanlage (12) ist, die an ein herkömmliches Haushaltsstromnetz anschließbar ist.

## Claims

1. A sun protection installation comprising a sun protection awning (52), at least one drive for adjusting the latter and an anemometer which, once a variable above a threshold value is exceeded, initiates a controller (14) to retract the awning (52) and detects the wind load acting upon the sun protection installation (12) even with regard to wind speed components that are deviating from the horizontal, **characterized in that** the anemometer comprises a sensor (84; 100; 184) for the detection of vibrations, said sensor detecting the wind-induced vibrations of a reference body (86) exposed to the wind flow.

2. A sun protection installation according to Claim 1, **characterized in that** the sensor for the detection of vibrations is designed as a ball or mercury switch, as a microphone, or as a Hall sensor (100) cooperating with a magnet (184).

3. A sun protection installation according to Claim 1 or 2, **characterized in that** the reference body (86) is designed as an oscillating circular cylinder or as an oscillating ball, each having a defined diameter, and that the sensor (84) initiates retraction of the awning (52) once a defined limit frequency is exceeded.

4. A sun protection installation according to anyone of Claims 1 to 3, **characterized in that** the reference body (86) is retained by an oscillating membrane (92).

5. A sun protection installation according to anyone of the preceding claims, **characterized in that** the resonant frequency of the oscillating system comprising reference body (86) and membrane (92) is outside of the frequency range covering the turbulence spectrum of the wind.

6. A sun protection installation according to anyone of the preceding claims, **characterized in that** wind guiding elements (96) which preferrably environ the reference body (86) as a guard (98) at least partially are provided upstream of the reference body (86) as seen in the direction of wind inflow.

7. A sun protection installation according to anyone of the preceding claims, **characterized in that** a sensor (60, 62) is provided for detecting the actual position of the awning (52) and that the controller (14) determines the actual mechanical load of the sun protection installation (12) on the basis of the detected actual position of the awning (52) and the measured wind load.

8. A sun protection installation according to anyone of the preceding claims, **characterized in that** the anemometer including the sensor (84; 100; 184) is arranged in the immediate vicinity of the sun protection installation (12) and is connected to a controller (14) activating the latter in an individual manner.

9. A sun protection installation according to anyone of the preceding claims, **characterized in that** the anemometer is a direct component of the sun protection installation (12) which is preassembled ready for operation and can be connected to a conventional household power supply system.

## Revendications

1. Pare-soleil avec un rideau protecteur (52), au moins un entraînement pour son positionnement et un anémomètre qui détermine, lors du dépassement d'une grandeur supérieure à une valeur seuil, une commande (14) permettant de relever le rideau (52) et qui collecte également la charge due à l'action du vent sur le pare-soleil (12) relative aux composantes de vecteur vent variant par rapport à l'horizontal, **caractérisé en ce que** l'anémomètre présente un capteur (84 ; 100 ; 184) destiné à collecter des vibrations lequel collecte les oscillations provoquées par le vent d'un corps de référence (86) qui est exposé au flux venteux.

2. Pare-soleil selon la revendication 1, **caractérisé en ce que** le capteur destiné à collecter des vibrations se présente sous la forme d'un commande à rotule ou d'un contact au mercure, sous la forme d'un microphone ou sous la forme d'un capteur à effet Hall (100) interagissant avec un aimant (184).

3. Pare-soleil selon la revendication 1 ou 2, **caractérisé en ce que** le corps de référence (86) se présente sous la forme d'un cylindre circulaire positionné de façon à pouvoir vibrer ou une bille positionné de façon à pouvoir vibrer chacun présentant un diamètre déterminé et le capteur (84) détermine au-delà d'une fréquence seuil déterminée l'enroulement du rideau (52).

4. Pare-soleil selon l'une quelconque des revendications 1 à 3, **caractérisé en ce que** le corps de référence (86) est maintenu par une membrane pouvant vibrer (92).

5. Pare-soleil selon l'une quelconque des revendications précédentes, **caractérisé en ce que** la fréquence propre du système pouvant vibrer composé du corps de référence (86) et de la membrane (92) se situe en dehors de la plage de référence, dans laquelle se trouve le spectre de turbulence du vent.

6. Pare-soleil selon l'une quelconque des revendications précédentes, **caractérisé en ce que** des éléments de conduite du vent (96) sont prévus dans la direction de la circulation du vent devant le corps de référence (86), lesquels entourent, de préférence, sous la forme d'une grille de protection (98) le corps de référence (86) au moins de façon partielle.

7. Pare-soleil selon l'une quelconque des revendications précédentes, **caractérisé en ce qu'**un capteur (60, 62) est prévu pour la collecte des valeurs réelles du rideau (52) et la commande (14) détermine la charge mécanique réelle du pare-soleil (12), à partir de la position réelle saisie pour le rideau (52) et la charge du vent mesurée.

8. Pare-soleil selon l'une quelconque des revendications précédentes, **caractérisé en ce que** l'anémomètre est agencé avec un capteur (84 ; 100 ; 184) à proximité immédiate du pare-soleil (12) et est relié avec une commande guidant ce dernier de façon indépendante (14).

9. Pare-soleil selon l'une quelconque des revendications précédentes, **caractérisé en ce que** l'anémomètre fait directement partie intégrante du pare-soleil prémonté en usine (12) qui est raccordable au réseau domestique traditionnel.
